(19) Europäisches Patentamt
European Patent Office
Office européen des brevets

(11) EP 1 363 143 A1

(12) **EUROPEAN PATENT APPLICATION**

(43) Date of publication:
**19.11.2003 Bulletin 2003/47**

(51) Int Cl.[7]: **G02B 5/02**, G02B 5/18, G02F 1/1335

(21) Application number: **02405403.3**

(22) Date of filing: **17.05.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Rolic AG**
**6301 Zug (CH)**

(72) Inventors:
- **Ibn-Elhaj, Mohammed**
**4123 Alischwil (CH)**
- **Schadt, Martin**
**4411 Seltisberg (CH)**

(74) Representative:
**Liebetanz, Michael, Dipl.-Phys. et al**
**Isler & Pedrazzini AG,**
**Patentanwälte,**
**Postfach 6940**
**8023 Zürich (CH)**

(54) **Bright and white optical diffusing film**

(57) The invention relates to optical films and coatings and more specifically to a film or coating acting as a diffuse reflector or a diffuser, which is formed of a monomer-corrugated film or coating, which, when illuminated with CIE standard illuminant D65 under a selected direction has the property that within a desired angular range of observation of at least five degrees the difference in the CIE chromaticity coordinates (x, y) of said diffuse reflector or diffuser and of standard white $BaSO_4$ is not more than 0.05 and the gain in brightness compared to standard white $BaSO_4$ is not less than two. Diffusers and reflectors according to the invention are capable to redirect the transmitted or reflected incident light into a desired off-specular viewing cone whose shape is defined by the groove topology. The sizes (both grooves period and height), the vertical profile of the corrugations as well as their distributions and volume fraction can be adjusted via the MC-process. It can be used to control the spatial distribution of transmitted and reflected light and to achieve a desired state of polarization and whiteness.

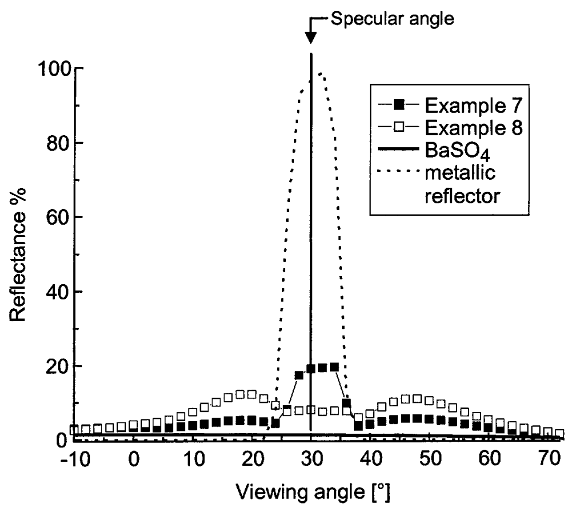


**Fig. 8c**

Reflectance versus viewing angle for Examples 7 and 8 when illuminated under -30° with respect to the normal



Printed by Jouve, 75001 PARIS (FR)

## Description

Generally, the present invention relates to optical films and coatings. More specifically, the present invention relates to a film or coating acting as a diffuse reflector or a diffuser.

Diffusers and diffuse reflectors are employed for various applications where light from a light source is to be used efficiently. Such applications are for example reflective displays, projection screens, reflectors of lighting equipment, etc.

In particular, diffuse reflectors are useful for improving the performance of reflective displays, especially liquid crystal displays (LCDs). Parameters to be improved are primarily brightness, angle of view of maximum brightness, and poor contrast hampered by glare. The realization of efficient white paper-like reflective displays requires diffuse reflectors having a broad viewing zone, low glare, polarization independent reflectance, paper-white appearance and a high gain in brightness.

Whiteness can for example be characterized by comparison with a "standard white". As standard white often $BaSO_4$ or spectralon is used. In order to compare the color of different reflectors, measurements of their color coordinates are made, for instance the color coordinates based on the CIE 1931 standard under irradiation by the CIE standard daylight illuminant D65, and these color coordinates are then compared with the corresponding color coordinates of $BaSO_4$. The CIE coordinates of $BaSO_4$ are (Y, x, y) = (1.33, 0.314, 0.330).

The gain in brightness (the brightness enhancement) can also be characterized by comparison with a standard white such as $BaSO_4$ or spectralon. It can be defined as the ratio of the reflectance from the reflector in question and the reflectance from a standard white under the same illumination and viewing conditions. For instance, from the CIE coordinates the gain may be defined as the ratio $Y/Y_0$ of the luminance Y of the reflector in question and the luminance $Y_0$ of $BaSO_4$.

Conventional reflective LCDs, for example, use metallic reflectors which are brightest at the glare angle. However, to avoid serious image degradation due to specular reflection (reflection at the glare angle) from the reflector and from the display surface, a viewer will read the display in a tilted position such that an offset from the glare angle having maximum reflection occurs. As a consequence, contrast and brightness degrade and colors desaturate.

To remedy these problems, holographic reflectors have been developed which improve brightness and contrast by deflecting the display image from the glare angle. The same holds for certain diffuse directive reflectors with asymmetric, mechanically machined topologies, such as blazed, or micro slanted reflectors. However, existing solutions still exhibit limitations, such as restricted angle of view, insufficient brightness over the visible spectral range, colored appearance depending on the wavelength and viewing angle, sensitivity to the state of polarization of incident light, complexity of fabrication, difficulty to apply to large areas, costs, or non in-situ applicability of the reflectors.

By way of background information, Fig. 1 schematically shows a single-modulation sinusoidal relief diffraction grating with a period A and a height h. It is well known that light of wavelength $\lambda$ which is incident on such a grating structure at an angle $\theta_i$ with respect to the grating normal will be diffracted, perpendicularly to the groove direction, into several beams or orders (m) making an angle $\theta_m$ with the surface normal. The diffracted orders (m=0, $\pm1$, $\pm2$, etc.) obey the grating equation $m\lambda f = \sin(\theta_i) - \sin(\theta_m)$ where $f = 1/\Lambda$ is the grooves frequency or density. For a particular wavelength $\lambda$, all values of diffraction order m for which $|m\lambda/\Lambda| < 2$ correspond to physically realizable diffraction orders. Therefore, only a finite number of diffraction orders can propagate, for example those shown in Fig. 1 where $R_0$ is the zero order (m=0) or specular reflection along $\theta_i=\theta_0$, $R_1$ is the first order diffraction (m=1) along $\theta_1$, and R2 is the second order (m=2) along $\theta_2$.

The grating can be employed either in reflection or transmission and the size can be selected to produce a high efficiency at selected wavelengths and/or diffracted orders (viewing angles). Drawbacks of single-frequency gratings include the production of a narrow viewing zone and a wavelength dependent reflectance or transmittance. This generally results in reflectors having a colored appearance, which depends on the wavelength and viewing angle, or having a reflectance which dependent on the state of polarization of incident light.

It is in principle possible to avoid most of these problems using specific corrugations or topologies. For example, if instead of a single frequency, several frequencies, or more general several groove sizes, exist in a single-layer, their values and distributions can be adjusted so that the desired characteristics (higher gain, wider viewing angle, whiter appearance, polarization-independent reflectance etc.) are produced. For a particular set of values of the groove frequency and the angles $\theta_i$ and $\theta$, the grating equation is satisfied by more than one wavelength. There may be several discrete wavelengths which, when multiplied by successive integers m, satisfy the condition for constructive interference. Similarly, for a particular set of values of the wavelength and the viewing angles $\theta_i$ and $\theta$, the grating equation is satisfied by more than one groove frequency or groove period. Successive diffraction order may also overlap along the same viewing angle. It is clear from the grating equation that the light of wavelength $\lambda$ incident in the first order (m=1) will coincide with the light of wavelength $\lambda/2$ diffracted in the second order (m=2), etc. for all m satisfying the equation. If instead of a single frequency, several frequencies (sizes) are present, the same holds by varying the groove frequency, i.e. the light of wavelength $\lambda$ diffracted from a groove frequency 2f in the first order (m=1)

will coincide with the light from a groove frequency f diffracted in the second order (m=2), etc., thereby increasing the gain in brightness along that particular angle. Also, the existence of several frequencies may enhance the viewing zone. For example, the light of wavelength $\lambda$ will be diffracted in the first order (m=1) from a groove frequency $f_1$ along the angle $\theta_1$ and from a groove frequency $f_2$ along the angle $\theta_2$.

A means to discuss and characterize surface scattering and reflection is the bidirectional reflection distribution function BRDF (see e.g. John C. Stover in SPIE Vol. 1165, Scatter from optical components (1989) p. 2-9). The BRDF, which relates the differential illuminance of the surface with the reflected differential luminance, is a multidirectional function that describes the angular and polarization dependence of the intensity of light reflected and scattered from a surface. In some cases, the BRDF is essentially proportional to the power spectral density function PSD(f) involving the spatial frequency vector f. Therefore, the interpretation of scattering data may be based on PSD(f), which can be derived directly from surface profile data by taking the square of the Fourier transform of the surface profile h(x,y). The PSD is one of the most important factor in the expression of BRDF since it is a purely surface quantity and contains information (periodicity, shape, etc.) about the surface responsible for scattering. The components of the surface frequency vector are related to the scattering angles by the grating equations:

$$f = \begin{pmatrix} fx \\ fy \end{pmatrix} = \frac{1}{\lambda} \begin{pmatrix} \sin\theta_S \cos\varphi_S - \sin\theta_i \\ \sin\theta_S \sin\varphi_S \end{pmatrix}$$

which can be viewed as a generalization of the grating equation for the first-order diffraction from a grating with the spatial wavelength A=1/f. Here, the scattering angles $\theta$ are measured relative to the surface normal (polar angles), $\varphi_s$ is measured relative to the plane of incidence (azimuthal angle), and fx and fy are the frequencies of corrugations along the x and y axis, respectively.

If the surface corrugation is spatially isotropic, the PSD depends only on the magnitude of the surface spatial frequency and is independent of its direction in the plane of the surface (i.e. the azimuthal orientation $\varphi_s$). On the other hand, if the surface corrugation contains periodic components, such as sinusoidal grooves, the scattered light yields an angular distribution with a series of discrete sharp diffraction peaks whose positions are given by the grating equation. If the grooves length decreases, the sharpness weakens and the diffraction peaks are enlarged along the grooves direction and more light is scattered into azimuthal directions. Also, if the grooves are oriented perpendicularly to the plane of incidence ($\varphi_s$=0), diffraction orders occur along this plane as indicated in Fig. 1. However, if the grooves are oriented out of the plane of incidence ($\varphi_s \neq 0$), then light will be, at least, partly scattered out of plane. Therefore, besides the polar viewing zone, some control over the azimuthal viewing zone can also be achieved by adjusting parameters such as the degree of groove orientation and size distributions. This makes it possible to fabricate diffusers and reflectors having moderate directivity. Such diffusers or diffuse reflectors are for instance preferable for liquid crystal displays because one can use the greater portion of diffused light along the polar viewing zone efficiently without a complete narrowing of the azimuthal viewing zone.

If several scattering mechanisms are present, arising from different origins or simply due to different scattering topologies or different grooves directions, and they are (statistically) independent, their BSDFs add. If they are not independent, there may be important interference effects which have an intermediate wavelength dependence.

Recently, a new technology to generate corrugations at the surface of polymer films has been described. It is now known as monomer-corrugation (MC) technology and is disclosed for example in the PCT Patent Application Publication WO 01/29148 of Rolic AG, in M. Ibn-Elhaj & M. Schadt, Nature Vol. 410, p. 796-799 (2001) and in M. Ibn-Elhaj & M. Schadt, Asia Display / IDW '01 (Proceedings of the 21st International Display Research Conference), p. 505-508, all of which are incorporated herein by reference.

The MC-technology is based on the coating of blends of crosslinkable and non-crosslinkable materials - such as blends of liquid-crystalline pre-polymers and monomeric liquid crystals, where only the pre-polymers are crosslinkable. After coating, phase separation or demixing is progressively induced by crosslinking the crosslinkable component (s), preferably via exposure to ultraviolet radiation. Subsequent removal of the non-crosslinkable component(s) leaves pores in the crosslinked, solid polymer thin-film. Size and shape of the pores depend on MC-material design and film preparation. In addition to topologically isotropic pores, anisotropic MC-topologies can be generated, e.g. on surfaces exhibiting anisotropic aligning forces, such as orientation layers for liquid crystals.

Pore or groove period and height of the vertical MC-profile as well as the distribution and volume fraction of the pores or grooves are tunable by adjusting production parameters, in particular kind of solvents, ratio of the mixture, concentration in the solvent, film thickness, intensity, duration, wavelength, angle of incidence and state of polarization of light as well as aligning direction and strength of alignment. Fig. 2 shows a contact-mode atomic force microscopy (AFM) image of 30x30 micrometers, which illustrates a typical topology of such an MC-film. The average period and average height of the grooves are $\Lambda_a$ = 3.75 micrometers and $h_a$ = 218 nanometers and the groove volume fraction $\Phi$

is approximately 48 %. Fig. 3 gives the AFM cross-sectional profile of the grooved structure of the MC-film shown in Fig. 2 along the trace indicated as a white line.

It has also been described that in principle MC-topologies can be made, which act as diffusers and - with a thin metal layer deposited on top of the diffuser - as diffuse reflectors, and that such diffusers or diffuse reflectors may show improved brightness enhancement. However, with diffusers and diffuse reflectors having a good brightness, it is generally difficult to simultaneously attain to a real white appearance comparable to standard-white over a broad enough viewing zone, and this finding was also true for MC-films.

It would be desirable to have diffusers and diffuse reflectors that show a substantially uniform and constant reflectance over a certain wavelength range. Especially, it would be desirable to have diffusers and diffuse reflectors, which show a significant brightness enhancement and the same time a whiteness that is close to a standard-white such as $BaSO_4$ or spectralon.

The inventors of the present invention have now succeeded in further developing the MC-technology so that MC-topologies having particular enhanced properties can be created.

Accordingly, the present invention provides

a diffuse reflector or diffuser

formed of a monomer-corrugated film or coating,

which,

when illuminated with CIE standard illuminant D65 under a selected direction (for instance under 30° with respect to the surface normal),

has the property that within a desired angular range of observation of at least five degrees (for instance within a polar angle $\theta$ of from 15° to 20°)

the difference in the CIE chromaticity coordinates (x, y) of said diffuse reflector or diffuser and of standard white $BaSO_4$ is not more than 0.05 and

the gain in brightness compared to standard white $BaSO_4$ is not less than two.

The monomer-corrugated film or coating is made by a method, which comprises making a mixture of at least two materials of which one is cross-linkable and the other is not cross-linkable, applying the mixture to a substrate, cross-linking at least a substantial portion of the cross-linkable material, and removing at least a substantial portion of the not cross-linkable material.

Preferably, the difference in the CIE chromaticity coordinates (x, y) is not more than 0.025, in a more preferred embodiment not more than 0.01.

Advantageously, the gain in brightness is not less than five, and more preferably not less than ten.

Preferably, the difference in the CIE chromaticity coordinates (x, y) and the gain in brightness is as specified within a desired angular range of observation of at least ten degrees, more preferably within a desired angular range of observation of at least twenty degrees, and most preferably within a desired angular range of observation of at least thirty degrees.

Usefully, the structure of the monomer-corrugated film or coating comprises a pre-selected distribution of groove periods and/or groove heights. Preferably, the distribution of groove periods substantially lies between 0.5 and 10 micrometers. Preferably, the distribution of groove heights substantially lies between 50 and 450 nanometers.

Advantageously, within the desired angular range of observation, the reflectance or transmittance of the diffuse reflector or diffuser is substantially polarization-independent.

Usefully, the cross-linkable material used to make the monomer-corrugated film or coating may be maintained in an oriented state by laterally anisotropic aligning forces during crosslinking.

The orientation may be imposed for example by an aligned substrate surface or an underlying orientation layer, which inter alia may be a photo-oriented layer such as an azo dye or linearly polymerized photopolymer or a mechanically produced orientation layer such as a rubbed polyimide. An other possibility would be to use a mixture that itself contains a photo-orientable component; examples of this kind of orientation method can for instance be found in the PCT Patent Application Publication WO 99/64924 of Rolic AG.

Preferably, the cross-linkable material used to make the monomer-corrugated film or coating comprises molecules of a rod-like (calamitic) shape. More preferably, the cross-linkable material is liquid crystalline, and in such a case the non-cross-linkable material advantageously may also be liquid crystalline.

Examples of suitable materials are well known to those skilled in the art. Examples of such materials and methods of making and using the materials can be found in, for example, European Patent Application Publication EP-0331233, PCT Patent Application Publications WO-95/24454, WO-00/04110, WO-00/07975, WO-00/48985, WO-00/55110 and WO-00/63154, and U.S. Patent US-5,567,349.

The present invention is believed to be applicable to displays such as reflective or transflective displays, in particular liquid crystal displays, but also projection screens, reflectors of lighting equipment, optical communications etc.

Thus, the invention further extends to an optical display device, preferably a liquid crystal display, comprising

a diffuse reflector or diffuser as set forth above.

Diffusers and reflectors according to the invention are capable to redirect the transmitted or reflected incident light into a desired off-specular viewing cone whose shape is defined by the groove topology. The sizes (both grooves period and height), the vertical profile of the corrugations as well as their distributions and volume fraction can be adjusted via the MC-process. It can be used to control the spatial distribution of transmitted and reflected light and to achieve a desired state of polarization and whiteness.

It is a further advantage of diffusers and diffuse reflectors according to the invention that they can be made in a single-layer coating process.

The above summary of the present invention is not intended to describe each disclosed embodiment or every implementation of the invention. The invention may be more completely understood in consideration of the following description of various embodiments of the invention in connection with the accompanying drawings, in which:

Fig. 1 is a schematic illustration of a single frequency sinusoidal grating showing some diffracted orders according to the grating equation;

Fig. 2 is an atomic force microscope image (30x30 micrometers) showing an example of a topologically structured film made by monomer corrugation technology;

Fig. 3 gives the AFM cross-sectional profile of the grooved structure shown in Fig. 2 along the trace indicated as a white line;

Fig. 4a is a graph of the grooves frequency distribution of an example of a diffuse reflector according to the invention (Example 1), represented as averaged one-dimensional power spectral density function 1D-PSD(*f*);

Fig. 4b is a graph of the reflectance versus viewing angle for Example 1 when illuminated under -30° with respect to the normal;

Fig. 4c is a graph of the wavelength dependence of the reflectance for Example 1 when illuminated under -30° and viewed at different viewing angles from 5° to 25°;

Fig. 5a is a graph of the grooves frequency distribution of a further example of a diffuse reflector according to the invention (Example 2);

Fig. 5b is a graph of the reflectance versus viewing angle for Example 2 when illuminated under -30° with respect to the normal;

Fig. 5c is a graph of the wavelength dependence of the reflectance for Example 2 when illuminated under -30° and viewed at different viewing angles from 5° to 25°;

Fig. 6a is a graph of the grooves frequency distribution of yet another example of a diffuse reflector according to the invention (Example 3);

Fig. 6b is a graph of the viewing angle variation of the gain in reflectance for Example 3 when illuminated under -30° with respect to the normal;

Fig. 7a shows atomic force microscope images (30x30 micrometers) of three further examples of diffuse reflectors according to the invention (Examples 4 to 6);

Fig. 7b is a graph of the grooves frequency distributions of Examples 4 to 6;

Fig. 7c is a graph of the reflectance versus viewing angle for Examples 4 to 6 when illuminated under -30° with respect to the normal;

Fig. 8a is a graph of the grooves frequency distribution of yet two further examples of diffuse reflectors according to the invention (Examples 7 and 8);

Fig. 8b is a graph of the grooves height distributions of Examples 7 and 8; and

Fig. 8c is a graph of the reflectance versus viewing angle for Examples 7 and 8 when illuminated under -30° with respect to the normal.

The inventors have found that the MC-technology allows the preparation of diffusers and diffuse reflectors according to the invention having suitable topological parameters by controlling the preparation parameters during the phase separation process. For example, by suitably varying the crosslinking energy, MC-topologies having grooves of different volume fraction as well as different groove period and height distributions can be achieved. However, also suitable MC-topologies having similar groove period distributions but different groove height distributions and volume fractions are achievable.

Examples of such corrugated coatings are those with a superposition of several grooves sizes, which may be spatially ordered or disordered. If the size of each groove (i) is defined by a frequency ($f_i$) and height ($h_i$), then the range of existing frequencies and heights as well as their relationship can be adjusted by controlling the cross-linking process. Each groove of frequency $f_i$ (or set of grooves) will scatter light into a well defined angle according to the grating equation. The values of $h_i$ and $f_i$ and their distributions can be adjusted such that, in a predefined wavelength range, the viewing zone is markedly enhanced due to the scattering from the topology.

In addition to the viewing zone, which can be controlled according to the grating equation, the relative amount

of zero order specular and scattered-light can also be controlled by tuning the range and distribution of the aspect ratio (defined as h/Λ). For instance, by adjusting the aspect ratio the glare can be drastically reduced and more light can be redirected into off-specular directions resulting in a strong brightness enhancement at off-specular angles.

Some examples illustrating diffuse reflectors or diffusers, respectively, according to the invention will now be described.

For all examples, a mixture of photocrosslinkable and non-crosslinkable liquid crystal monomers was used. The chemical structure of the compounds is shown below. Compounds A, B and C are crosslinkable diacrylate monomers (pre-polymers), and Compound D, which is also named 5CAPO2, is a non-crosslinkable nematic liquid crystal monomer.

Compound A: 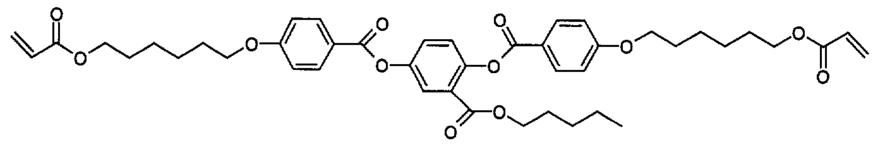

Compound B: 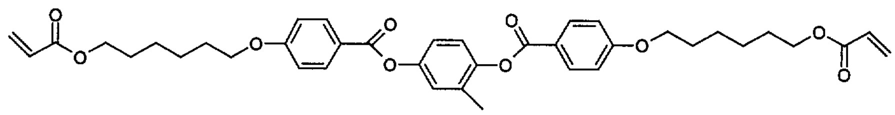

Compound C: 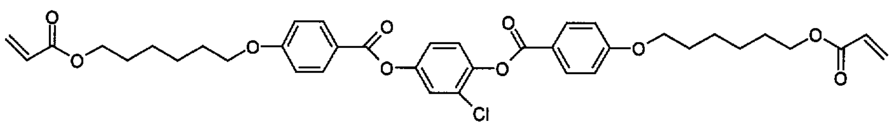

Compound D: 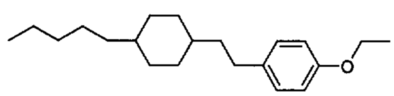

The mixture was prepared from 40 wt% of Compound A, 7.5 wt% of Compound B, 2.5 wt% of Compound C, 49 wt% of Compound D, 0.5 wt% of a photoinitiator (Irgacure (trade mark) 369 by CIBA), and 0.5 wt% of BHT (butyl hydroxy toluene) as an inhibitor.

From the above mixture, two solutions, a 22 wt% solution (MC-Solution-1) and a 15 wt% solution (MC-Solution-2), were made in a buthyl acetate / ethanol mixture (19 parts / 1 part). The solutions were homogenized with moderate stirring for 5 minutes using ultrasonic vibrations (with a Sonifier (trade mark) "W-250" digital by BRANSON Ultrasonics Corporation), and filtered trough a 0.2 micrometer filter.

For the preparation of the topologically structured films, MC-Solution-1 or MC-Solution-2 was coated on an orientation layer. In the examples, orientation layers made by contact-free linear photo-polymerization (LPP) technology were used. Specifically, a 2 % solution of a photo-orienting material, JP 265, commercially available from Vantico, which is a linearly photo-polymerizable polymer, in cyclopentanon was thinly spin coated at 3000 rpm onto glass plates. The plates were warmed for 10 minutes at 180 °C on a hotplate. The resulting layer had a thickness of about 60 nanometers. The layer was then irradiated for 30 seconds at room temperature with linearly polarized UV light from a 200 W mercury high pressure lamp. The intensity of the UV light at the plate was determined as 1 mW/cm$^2$. The direction of polarization of light lay in the plane perpendicular to the plates.

The specific composition of the mixture/solution and the specific parameters used in the preparation of corresponding films or coatings induce a surface topological structure, which shows the intended suitable groove formation, including for instance a controlled variation in groove period, groove height, groove shape, groove orientation etc.

EXAMPLE 1

This example illustrates a first sample of a diffuse reflector according to the invention.

To make the sample, the MC-Solution-1 described above was thinly spin coated at 6000 rpm onto an LPP orientation layer prepared in the above mentioned manner. The layer was then irradiated for 1 minute under nitrogen at room temperature by isotropic (non-polarized) light from a mercury lamp at an intensity in the ultraviolet of 0.7 mW/$cm^2$ to crosslink the crosslinkable liquid crystal monomers. After that, the layer was rinsed with ethanol to remove the non-crosslinked material, and annealed at 50 °C for about 5 minutes to remove residual solvent. Using contact-mode AFM, it was found that grooves (or channels) are formed, which were elongated in the direction of the underlying orientation layer. Finally, a thin silver layer of about 100 nanometers thickness was evaporated onto the grooved layer. AFM investigations showed that the evaporated metallic layer has covered the grooved layer completely, and that the grooves still existed.

The grooves frequency distribution of the sample - represented in the form of the averaged one-dimensional power spectral density function PSD(f) - is shown in Fig. 4a. The PSD function is the square of the Fourier transform of the surface profile (see explanation in the introductory part). From the figure, one can see that more than one groove frequency, i.e. more than one groove period, is present. Actually, there is a whole distribution of groove frequencies with the main part from between about 0.1 $\mu m^{-1}$ to about 0.66 $\mu m^{-1}$, i.e. a distribution of groove periods from about 1.5 μm to about 10 μm.

Fig. 4b illustrates the corresponding scattering properties, i.e. the viewing angle dependence of the reflectance from the sample when illuminated with P-polarized (parallel to the grooves direction) and S-polarized (perpendicular to the grooves direction) light with a wavelength of 550 nanometers under -30° with respect to the normal. It can be seen that a large part of the light is not specularly (30°) reflected but scattered into different directions leading to a broad scattering profile with a significant share of the light scattered into viewing angles between 0° and 60°. By way of comparison, the reflectance from standard white $BaSO_4$ is also indicated. Furthermore, it is apparent from the P- and S-polarized measurements that within a relatively large viewing zone the reflectance is polarization-independent.

The graph of Fig. 4c shows the wavelength dependence of the reflectance from the sample when illuminated with non-polarized light at -30° and viewed at different viewing angles. These results demonstrate that within a relatively large viewing zone the reflectance is substantially wavelength-independent, i.e. has a white appearance. More precisely, CIE coordinates determined from these curves, using a D65 illuminant, were (Y, x, y) = (2.41, 0.308, 0.321) at-5°, (3.6, 0.32, 0.329) at 0°, (5.64, 0.332, 0.344) at 5°, (9.94, 0.326, 0.35) at 10°, (13.4, 0.296, 0.328) at 15° and (11.13, 0.316, 0.323) at 25°, whereas the CIE coordinates ($Y_0$, $x_0$, $y_0$) of standard white $BaSO_4$ are (1.33, 0.314, 0.330).

If one defines the deviation from standard white as (Δx, Δy), wherein $\Delta x = x-x_0$ and $\Delta y = y-y_0$, a comparison of the data given demonstrates that the deviation is small, namely (Δx, Δy) = (-0.006, -0.009) at -5°, (0.006, -0.001) at 0°, (0.018, 0.014) at 5°, (0.012, 0.020) at 10°, (-0.018, -0.002) at 15° and (0.002, -0.007) at 25°.

In addition, it is also clear from Fig. 4b and 4c that the brightness is significantly enhanced compared to standard white. As a measure for the brightness gain, the luminance ratio $Y/Y_0$ can be taken, and a respective comparison shows an enhancement of $Y/Y_0$ = 1.81 at -5°, 2.71 at 0°, 4.24 at 5°, 7.47 at 10°, 10.08 at 15° and 8.27 at 25°.

Thus, the diffuse reflector of Example 1 has a white appearance which is close to the standard white of $BaSO_4$ while simultaneously maintaining high brightness over a broad viewing angle zone.

EXAMPLE 2

The preparation of Example 2 is similar to Example 1, except that MC-Solution-1 was now spin coated at 2000 rpm. The resulting grooves frequency distribution is shown in Fig. 5a. It has its main part from between about 0.1 $\mu m^{-1}$ to about 1.3 $\mu m^{-1}$, i.e. the groove periods lie mainly in the range from about 0.8 μm to about 10 μm. Fig. 5b illustrates the corresponding scattering properties when illuminated under -30° with respect to the normal, and it can be seen that the most part of the light is approximately evenly scattered into viewing angles between 10° and 60°. Furthermore, it is apparent from the P- and S-polarized measurements that the reflectance is almost perfectly polarization-independent. The difference in the reflectance of P- and S-polarized light and unpolarized light within the entire viewing zone is less than 4 %. The graph of Fig. 5c shows the wavelength dependence of the reflectance from the sample when illuminated with non-polarized light at -30° and viewed at different viewing angles. Also in this case the reflectance is substantially wavelength-independent, i.e. has a white appearance. CIE coordinates determined from these curves, using a D65 illuminant, are (Y, x, y) = (2.6, 0.303, 0.322) at -5°, (3.6, 0.304, 0.324) at 0°, (5.3, 0.307, 0.327) at 5°, (7.7, 0.316, 0.331) at 10°, (12.0, 0.339, 0.35) at 15° and (21.3, 0.313, 0.324) at 25°.

Corresponding values for the deviation from standard white are (Δx, Δy) = (-0.011, -0.008) at -5°, (-0.010, -0.006) at 0°, (-0.007, -0.003) at 5°, (0.002, 0.001) at 10°, (0.025, 0.020) at 15° and (-0.001, -0.006) at 25°, and for the brightness gain $Y/Y_0$ = 1.95 at -5°, 2.71 at 0°, 3.98 at 5°, 5.79 at 10°, 9.02 at 15° and 16.02 at 25°.

Thus, also the diffuse reflector of Example 2 has a white appearance while simultaneously maintaining high

brightness over a broad viewing angle zone.

EXAMPLE 3

For this example, MC-Solution-1 was thinly spin coated at 2100 rpm onto an LPP orientation layer made from the linearly photo-polymerizable polymer material JP 265 as described above. The layer was then irradiated under nitrogen at room temperature by isotropic (non-polarized) light from a mercury lamp at an intensity in the ultraviolet of 0.7 mW/cm$^2$ for 30 seconds to crosslink the crosslinkable liquid crystal monomers. Then, the layer was rinsed with ethanol to remove the non-crosslinked material and afterwards annealed at 50 °C for about 5 minutes to remove the residual solvent. Finally, a thin silver layer of about 100 nanometers thickness was evaporated onto the layer. After evaporation, AFM investigations showed that grooves elongated in the direction of the underlying orientation layer were formed in the layer of crosslinked liquid crystal monomers and that the layer was completely covered by the evaporated silver layer. The total thickness of the final sample was 380 nanometers.

The sample had an average groove period $\Lambda_a$ of 4.3 micrometers and an average groove height $h_a$ of 153 nanometers. In Fig. 6a, the averaged one-dimensional power spectral density function, i.e. the grooves frequency distribution, for the sample is given. It is calculated from the square of the averaged one-dimensional Fourier transformation of an AFM image perpendicular to the longitudinal grooves direction, and shows a distribution of groove frequencies with a main peek around 0.25 $\mu m^{-1}$ (corresponding to a groove period of about 4 $\mu$m).

The optical properties, i.e. the absolute angular reflectance, was investigated using a Perkin-Elmer Lambda 900 spectrometer equipped with an integrating sphere. Fig. 6b shows the viewing angle variation of the gain in reflectance or brightness relative to standard white $BaSO_4$ when illuminated with green light of 550 nanometers wavelength under an angle of -30° with respect to the normal. The gain in brightness is still more than 4 at viewing angles of 10° and 50° and increases to more than 20 in the region between 25° and 35°.

CIE coordinates determined for the sample of this Example 3 are (Y, x, y) = (1.9, 0.302, 0.320) at -5°, (2.7, 0.304, 0.321) at 0°, (3.9, 0.309, 0.325) at 5°, (6.5, 0.322, 0.337) at 10°, (12.3, 0.328, 0.349) at 15°, (18.6, 0.301, 0.330) at 20° and (27.7, 0.337, 0.344) at 25°, giving deviations from standard white of ($\Delta$x, $\Delta$y) = (-0.012, -0.010) at -5°, (-0.010, -0.009) at 0°, (-0.005, -0.005) at 5°, (0.008, 0.007) at 10°, (0.014, 0.019) at 15°, (-0.013, 0.000) at 20° and (0.023, 0.014) at 25°, and values for the brightness gain of $Y/Y_0$ = 1.43 at -5°, 2.03 at 0°, 2.93 at 5°, 4.89 at 10°, 9.25 at 15°, 13.98 at 20° and 20.83 at 25°.

EXAMPLES 4 TO 6

As Examples 4 to 6, three samples of diffusive reflectors according to the invention were prepared, which have similar groove volume fractions but different distributions of groove period and height.

For the preparation, MC-Solution-2 mentioned above was used. The solution was thinly spin coated onto an orientation layer as described in Example 1, but with varied spin coating speed. Example 4 used 2000 rpm, Example 5 1700 rpm, and Example 6 1200 rpm. The resulting layers were then crosslinked by ultraviolet radiation of 0.7 mW/cm$^2$ for 60 seconds, and afterwards rinsed with ethanol and annealed using the same procedure as described in Example 1. Finally, a silver layer of about 100 nanometers was evaporated onto the layers. The three samples had a total thickness of 300, 320 and 350 nanometers, respectively.

In Fig. 7a, AFM images of 30x30 micrometers of the three samples are depicted, Example 4 on the left side, Example 5 in the middle, and Example 6 on the right side. AFM investigations showed that the samples had nearly the same groove volume fraction, which was about 50%. However, the average groove periods $\Lambda_a$ and the average groove heights $h_a$ were different. The average groove period was 1.53 micrometers for Example 4, 1.9 micrometers for Example 5, and 2.32 micrometers for Example 6. The average groove height was 104 nanometers for Example 4, 123 nanometers for Example 5, and 147 nanometers for Example 6.

Fig. 7b shows the one-dimensional power spectral density functions, i.e. the grooves frequency distributions, for the samples, and in Fig. 7c, the measured viewing angle dependence of the reflectance of the samples illuminated with light of a wavelength of 550 nanometers under an angle of -30° with respect to the normal is illustrated. The arrows in Fig. 7c indicate the scattering angles corresponding to the maxima of scattered (off-specular) light. These angles are in agreement, according to the grating equation, with the average, or dominant, frequencies corresponding to the maxima of the one-dimensional power spectral density functions in Fig. 7b.

CIE coordinates (Y, x, y), deviations from standard white of ($\Delta$x, $\Delta$y), and values for the brightness gain of $Y/Y_0$ determined for the samples can be given as follows.

Example 4: (Y, x, y) = (5.7, 0.334, 0.351) at -5°, (8.5, 0.315, 0.343) at 0°, and (10.5, 0.287, 0.319) at 5°; ($\Delta$x, $\Delta$y) = (0.020, 0.021) at -5°, (0.001, 0.013) at 0°, and (-0.027, -0.011) at 5°; and $Y/Y_0$ = 4.29 at -5°, 6.39 at 0°, and 7.89 at 5°.

Example 5: (Y, x, y) = (4.8, 0.326, 0.333) at -5°, (7.6, 0.330, 0.345) at 0°, (11.2, 0.318, 0.344) at 5°, (14.3,

0.295, 0.327) at 10°, (5.5, 0.296, 0.329) at 55°, (3.9, 0.312, 0.345) at 60° and (2.5, 0.326, 0.354) at 65°; (Δx, Δy) = (0.012, 0.003) at -5°, (0.016, 0.015) at 0°, (0.004, 0.014) at 5°, (-0.019, -0.003) at 10°, (-0.018, -0.001) at 55°, (-0.002, 0.015) at 60° and (0.012, 0.024) at 65°; and $Y/Y_0$ = 3.61 at -5°, 5.71 at 0°, 8.42 at 5°, 10.75 at 10°, 4.14 at 55°, 2.93 at 60° and 1.88 at 65°.

Example 6: (Y, x, y) = (4.4, 0.309, 0.321) at -5°, (6.5, 0.328, 0.332) at 0°, (9.9, 0.322, 0.347) at 5°, (15.0, 0.325, 0.351) at 10°, and (17.9, 0.300, 0.333) at 15°; (Δx, Δy) = (-0.005, -0.009) at -5°, (0.014, 0.002) at 0°, (0.008, 0.017) at 5°, (0.011, 0.021) at 10°, and (-0.014, 0.003) at 15°; and $Y/Y_0$ = 3.31 at-5°, 4.89 at 0°, 7.44 at 5°, 11.28 at 10°, and 13.46 at 15°.

EXAMPLES 7 AND 8

The next two samples, Example 7 and Example 8, illustrate diffusive reflectors according to the invention, which were prepared so that they have comparable groove period distributions, but different groove height distributions.

These samples were made according to the method described in Example 3, except that the spin coating speed was 3000 rpm and the irradiation time for the crosslinking was 120 seconds for Example 7 and 60 seconds for Example 8.

Fig. 8a shows the one-dimensional power spectral density functions, i.e. the grooves frequency distributions, for the two samples. The shape of the distribution is very similar for both samples, which means that they have a comparable topology with respect to their groove period distribution. The samples differ, however, in respect of the heights of the grooves, as can be seen from their groove heights distributions shown in Fig. 8b.

Fig. 8c illustrates the resulting scattering properties. It shows the viewing angle variations of the reflectance, measured using a Perkin-Elmer spectrometer, when illuminated with light of 550 nanometers wavelength under -30° with respect to the normal. For comparison, also included in the figure are the reflectance values of standard white $BaSO_4$ and of a conventional metallic reflector made by evaporating a thin silver layer onto a smooth glass substrate.

Compared to the metallic reflector and its strong specular (or glare) peak, the glare of Example 7 is decreased by about 80 % and that of Example 8 by more than 90 %. This shows that by adjusting the aspect ratio (the ratio of height to period of the grooves), the glare can be reduced to a large extent and more light can be directed into off-specular directions.

CIE coordinates (Y, x, y), deviations from standard white of (Δx, Δy), and values for the brightness gain of $Y/Y_0$ are for Example 7: (Y, x, y) = (20.1, 0.290, 0.321) at 25°, and (21.6, 0.288, 0.319) at 30°; (Δx, Δy) = (-0.024, -0.009) at 25°, and (-0.026, -0.011) at 30°; and $Y/Y_0$ = 15.11 at 25°, and 16.24 at 30°; and for Example 8: (Y, x, y) = (5.1, 0.325, 0.337) at -5°, (6.6, 0.340, 0.347) at 0°, (11.3, 0.299, 0.338) at 20°, and (10.8, 0.284, 0.322) at 50°; (Δx, Δy) = (0.011, 0.007) at -5°, (0.026, 0.017) at 0°, (-0.015, 0.008) at 20°, and (-0.030, -0.008) at 50°; and $Y/Y_0$ = 3.83 at -5°, 4.96 at 0°, 8.50 at 20°, and 8.12 at 50°.

It should be understood that the intention is not to limit the invention to particular embodiments described. On the contrary, the intention is to cover all modifications, equivalents, and alternatives falling within the spirit and scope of the invention. Various modifications, equivalent processes, as well as numerous structures to which the present invention may be applicable will be readily apparent to those of skill in the art to which the present invention is directed upon review of the instant specification.

## Claims

1. A diffuse reflector or diffuser
   formed of a monomer-corrugated film or coating,
   which,
   when illuminated with CIE standard illuminant D65 under a selected direction
   has the property that within a desired angular range of observation of at least five degrees
   the difference in the CIE chromaticity coordinates (x, y) of said diffuse reflector or diffuser and of standard white $BaSO_4$ is not more than 0.05 and
   the gain in brightness compared to standard white $BaSO_4$ is not less than two.

2. The diffuse reflector or diffuser of claim 1, wherein the desired angular range of observation of at least five degrees comprises a polar angle θ of from at least 15° to 20°.

3. The diffuse reflector or diffuser according to claim 1 or 2, wherein the selected direction of illumination with CIE standard illuminant D65 is between 20° and 40°, preferably 30°, with respect to the surface normal.

4. The diffuse reflector or diffuser according to one of claims 1 to 3, wherein the gain in brightness is not less than five, and more preferably not less than ten.

5. The diffuse reflector or diffuser according to one of claims 1 to 4, wherein the difference in the CIE chromaticity coordinates (x, y) is not more than 0.025, in a more preferred embodiment not more than 0.01.

6. The diffuse reflector or diffuser according to one of claims 1 to 5, wherein the difference in the CIE chromaticity coordinates (x, y) and the gain in brightness is as specified within a desired angular range of observation of at least ten degrees, more preferably within a desired angular range of observation of at least twenty degrees, and most preferably within a desired angular range of observation of at least thirty degrees.

7. The diffuse reflector or diffuser according to one of claims 1 to 6, wherein the structure of the monomer-corrugated film or coating comprises a pre-selected distribution of groove periods (Λ) and/or groove heights (h).

8. The diffuse reflector or diffuser according to claim 7, wherein the distribution of groove periods (Λ) substantially lies between 0.5 and 10 micrometers.

9. The diffuse reflector or diffuser according to claim 7, wherein the distribution of groove periods (Λ) substantially lies between 1.5 and 5 micrometers.

10. The diffuse reflector or diffuser according to one of claims 7 to 9, wherein the distribution of groove heights (h) substantially lies between 50 and 450 nanometers.

11. The diffuse reflector or diffuser according to one of claims 7 to 9, wherein the distribution of groove heights (h) substantially lies between 100 and 300 nanometers.

12. The diffuse reflector or diffuser according to one of claims 7 to 11, wherein the groove volume fraction (Φ) is between 30 % and 70 %, preferably around 50 %.

13. The diffuse reflector or diffuser according to one of claims 1 to 12, wherein the square of the averaged one-dimensional Fourier transform of the surface profile perpendicular to the longitudinal groove direction comprises a distribution of groove frequencies with the main part of significant values from about 0.1 $\mu m^{-1}$ to about 2 $\mu m^{-1}$.

14. The diffuse reflector or diffuser according to one of claims 1 to 12, wherein the square of the averaged one-dimensional Fourier transform of the surface profile perpendicular to the longitudinal groove direction comprises a distribution of groove frequencies with the main part of significant values from about 0.1 $\mu m^{-1}$ to about 1.3 $\mu m^{-1}$.

15. The diffuse reflector or diffuser according to claim 13 or 14, wherein the distribution of groove frequencies comprises a maximum value between from about 0.1 $\mu m^{-1}$ to about 2 $\mu m^{-1}$, especially between about 0.1 $\mu m^{-1}$ to about 1.3 $\mu m^{-1}$, and more especially between about 0.1 $\mu m^{-1}$ to about 1 $\mu m^{-1}$.

16. The diffuse reflector or diffuser according to one of claims 1 to 15, wherein, within the desired angular range of observation, the reflectance or transmittance of the diffuse reflector or diffuser is substantially polarization-independent.

17. The diffuse reflector or diffuser according to one of claims 1 to 16, wherein the cross-linkable material used to make the monomer-corrugated film or coating was maintained in an oriented state by laterally anisotropic aligning forces during crosslinking.

18. The diffuse reflector or diffuser according to one of claims 1 to 17, wherein the orientation is due to an aligned substrate surface or an underlying orientation layer.

19. The diffuse reflector or diffuser according to claim 18, wherein the orientation layer is a photo-oriented layer.

20. The diffuse reflector according to one of claims 1 to 19, wherein a reflective layer, preferably a silver layer, is applied to the monomer-corrugated film or coating.

21. The diffuse reflector or diffuser according to one of claims 1 to 20, wherein the cross-linkable material used to

make the monomer-corrugated film or coating comprises molecules of a rod-like or calamitic shape, preferably the cross-linkable material is liquid crystalline.

**22.** A method of preparing the monomer-corrugated film or coating of a diffuse reflector or diffuser according to one of the preceding claims, comprising the steps of

- making a mixture of at least two materials of which one is cross-linkable and the other is not cross-linkable,
- applying the mixture to a substrate,
- cross-linking at least a substantial portion of the cross-linkable material, and
- removing at least a substantial portion of the not cross-linkable material.

**23.** The method according to claim 22, wherein the mixture itself contains a photo-orientable component.

**24.** An optical display device, comprising a diffuse reflector or diffuser according to one of the preceding claims 1 to 21.

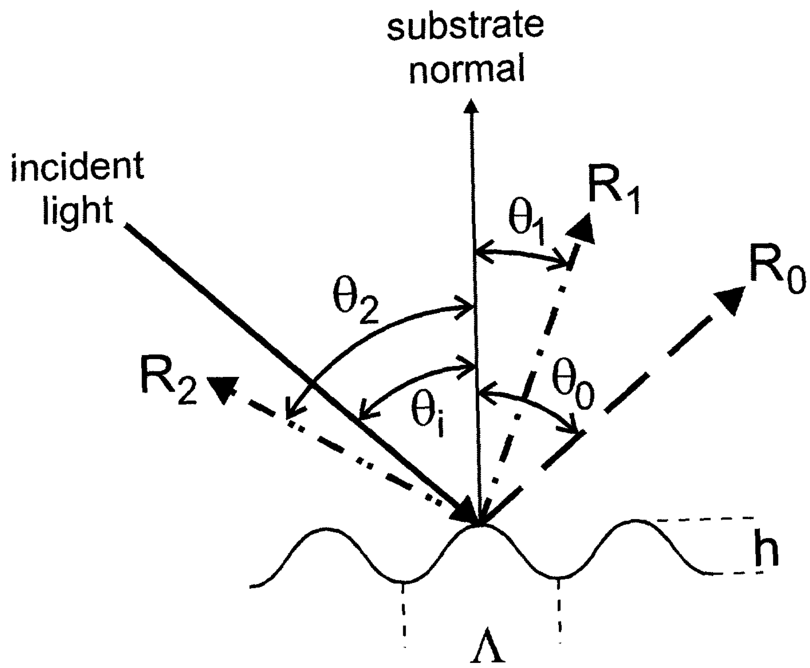


**Fig. 1**

Schematic illustration of a single frequency sinusoidal grating showing some diffracted orders according to the grating equation (see explanation in the text)

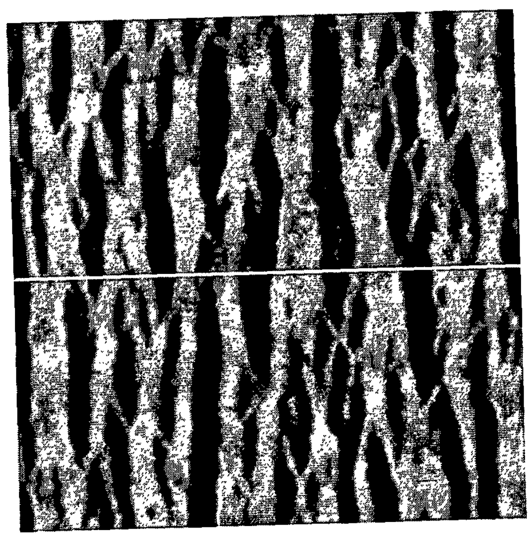

**Fig. 2**

Atomic force microscope image (30x30 micrometers) showing an example of a topologically structured film made by monomer corrugation technology

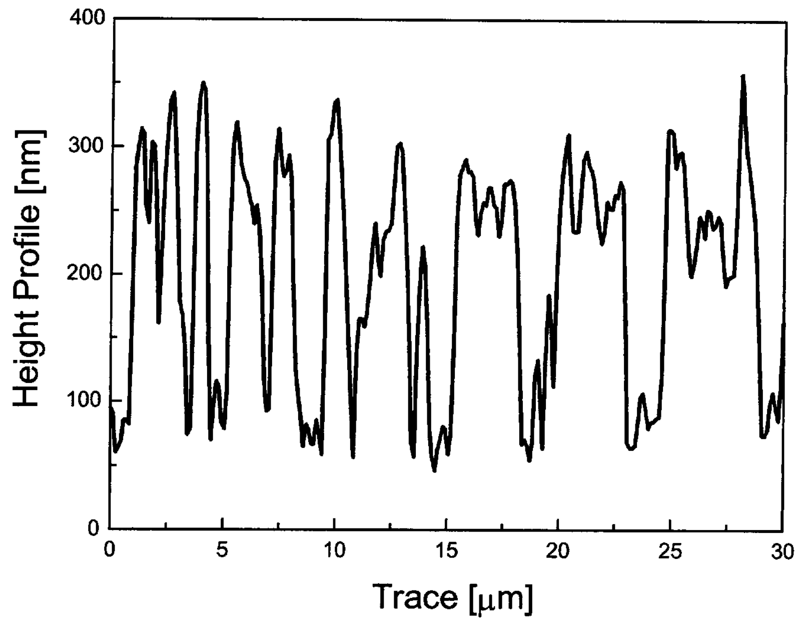


**Fig. 3**

AFM cross-sectional profile of the grooved structure shown in Fig. 2 along the trace indicated as a white line

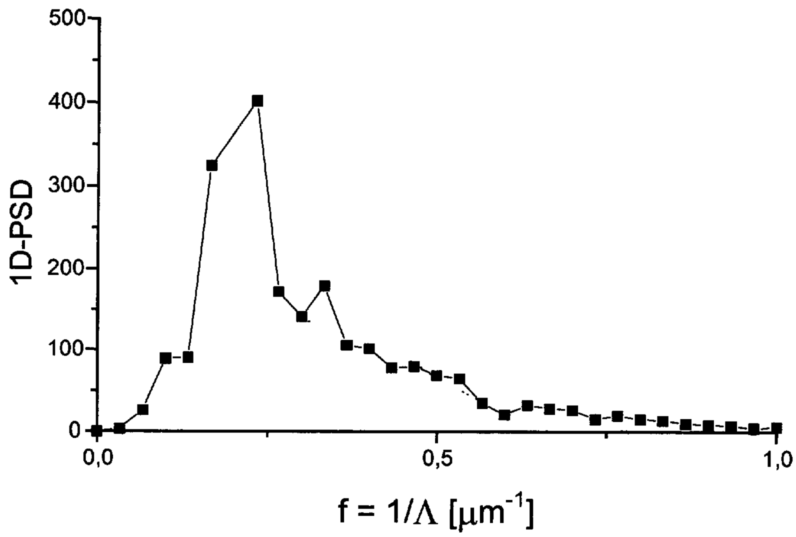


**Fig. 4a**

Grooves frequency distribution of Example 1, represented as one-dimensional power spectral density function 1D-PSD(*f*)

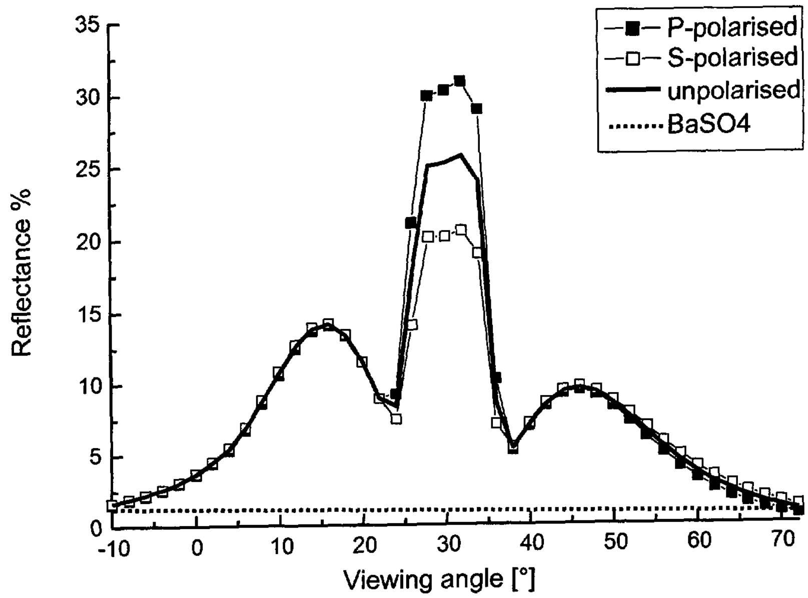


**Fig. 4b**

Reflectance versus viewing angle for Example 1 when illuminated under -30° with respect to the normal

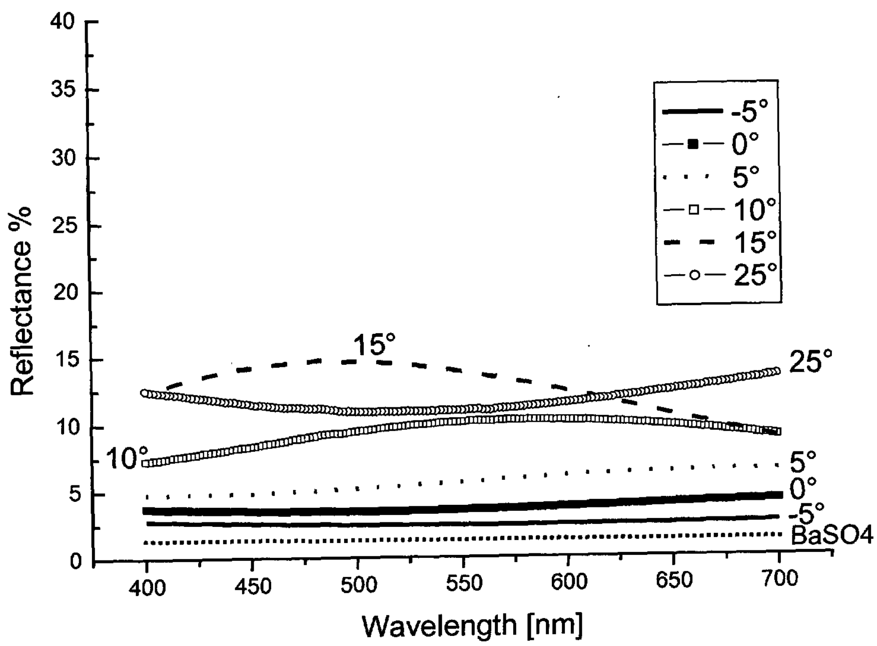


**Fig. 4c**

Wavelength dependence of the reflectance for Example 1 when illuminated under -30° and viewed at different viewing angles from 5° to 25°

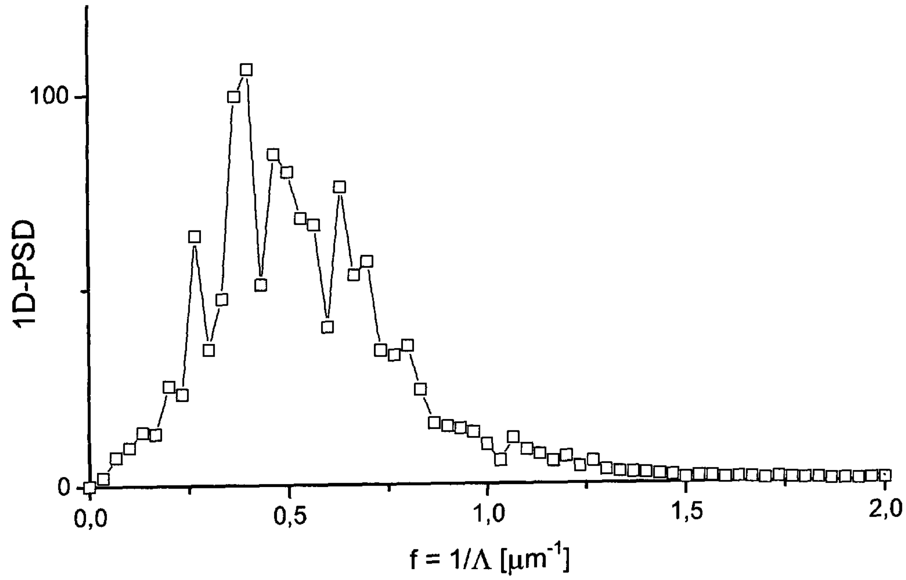


**Fig. 5a**

Grooves frequency distribution of Example 2, represented as one-dimensional power spectral density function 1D-PSD(*f*)

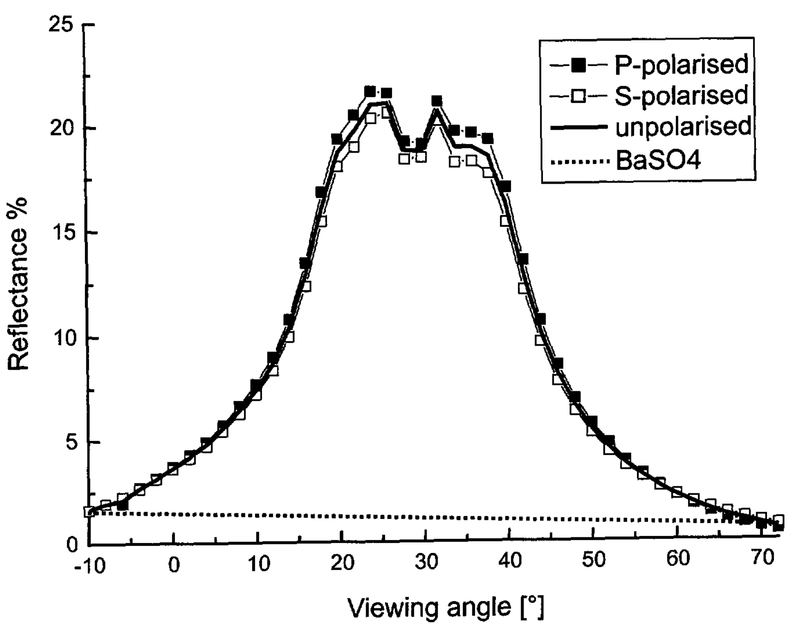


**Fig. 5b**

Reflectance versus viewing angle for Example 2 when illuminated under -30° with respect to the normal

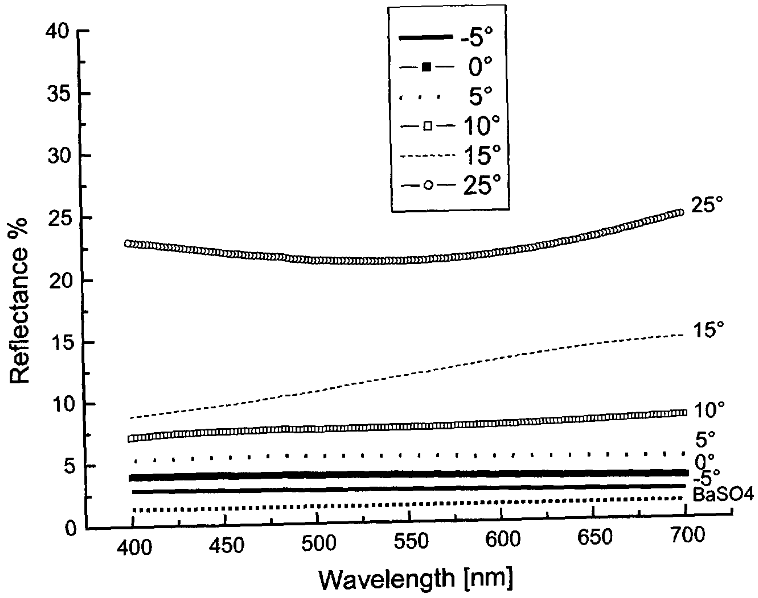


**Fig. 5c**

Wavelength dependence of the reflectance for Example 2 when illuminated under -30° and viewed at different viewing angles from 5° to 25°

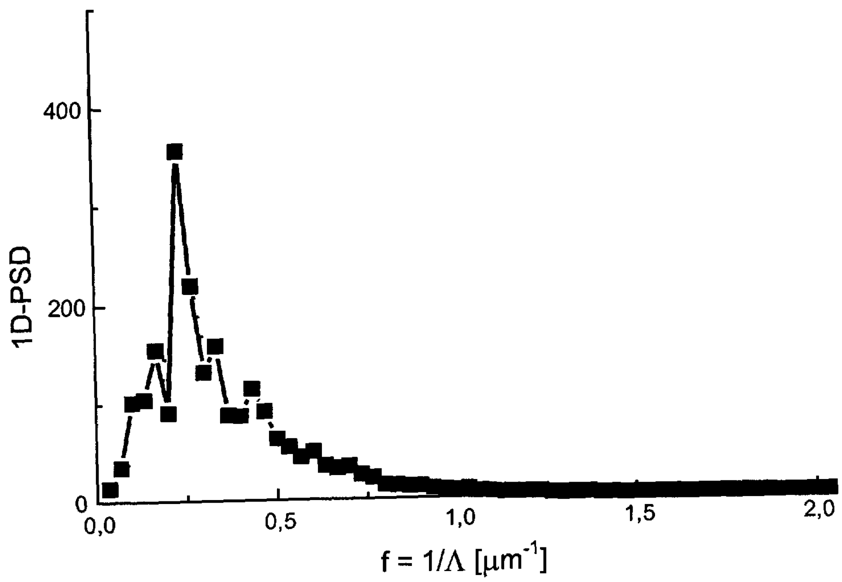


**Fig. 6a**

Grooves frequency distribution of Example 3, represented as one-dimensional power spectral density function 1D-PSD(*f*)

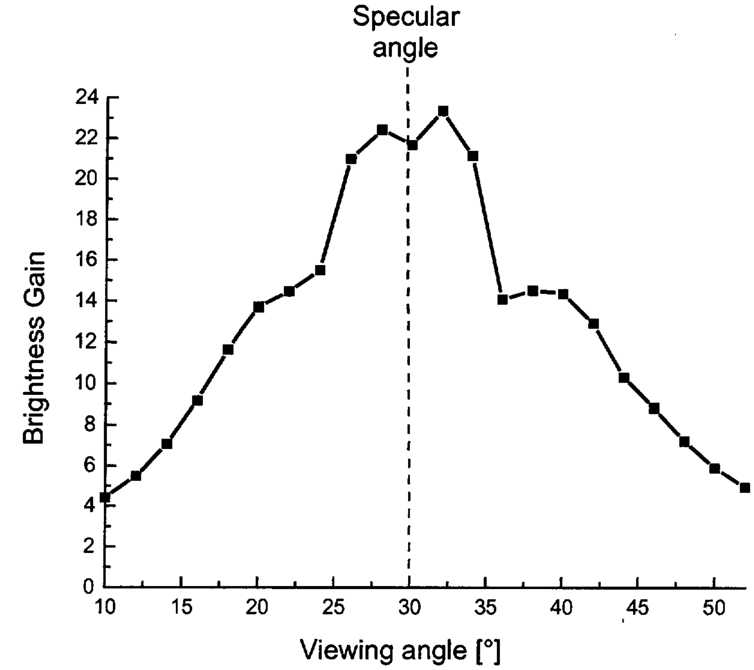


**Fig. 6b**

Viewing angle variation of the gain in reflectance for Example 3 when illuminated under -30° with respect to the normal

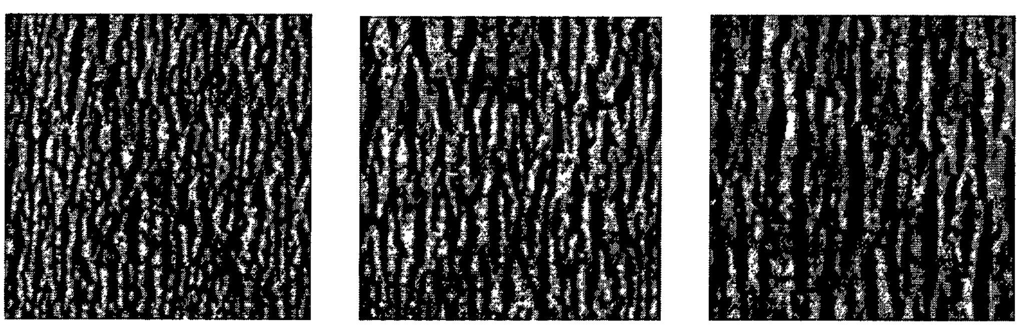

**Fig. 7a**

Atomic force microscope images (30x30 micrometers) of Examples 4 to 6

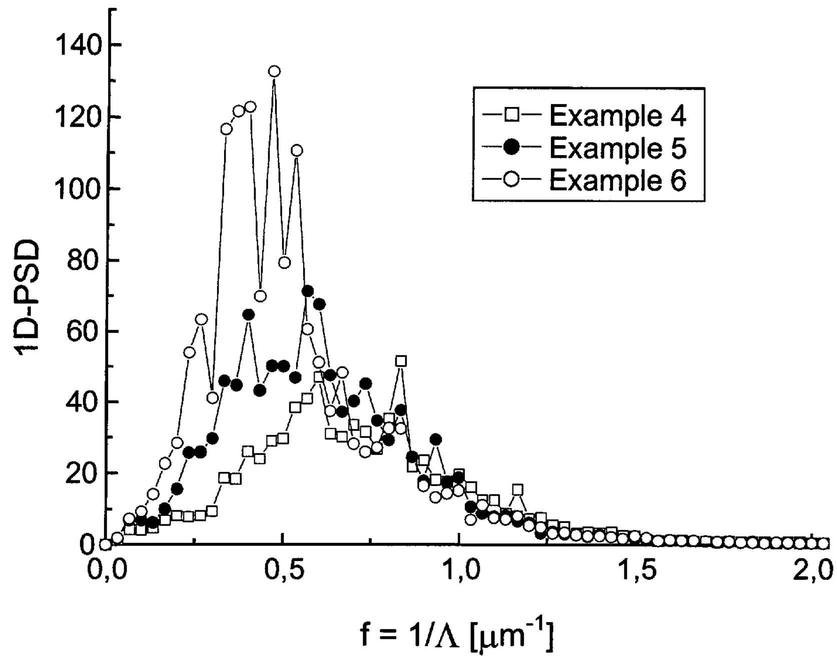


**Fig. 7b**

Grooves frequency distributions of Examples 4 to 6, represented as one-dimensional power spectral density function 1D-PSD(*f*)

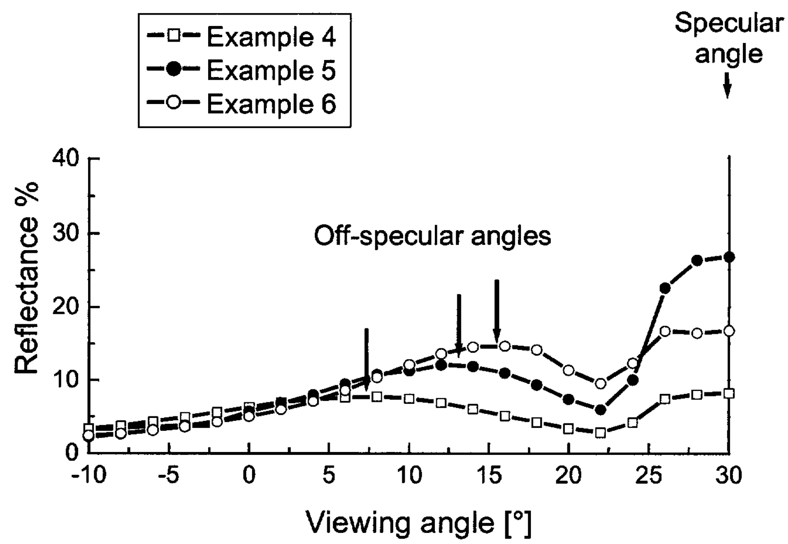


**Fig. 7c**

Reflectance versus viewing angle for Examples 4 to 6 when illuminated under -30° with respect to the normal

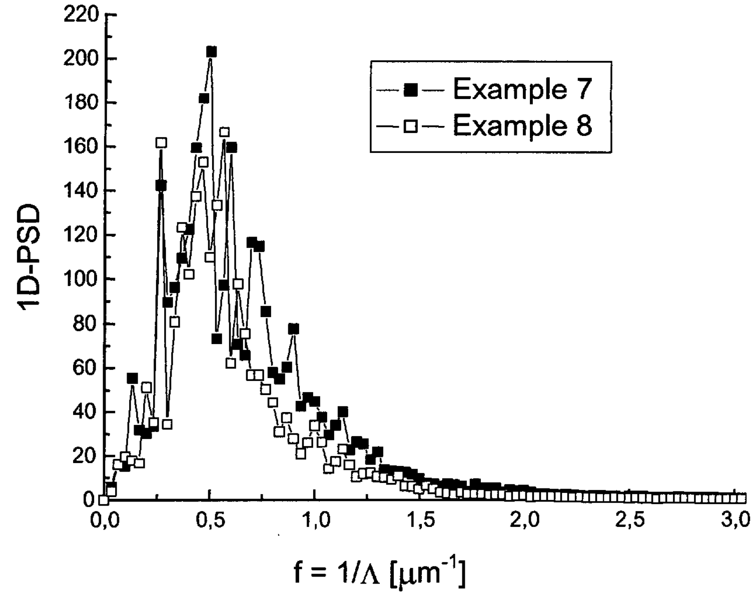


**Fig. 8a**

Grooves frequency distributions of Examples 7 and 8, represented as one-dimensional power spectral density function 1D-PSD(*f*)

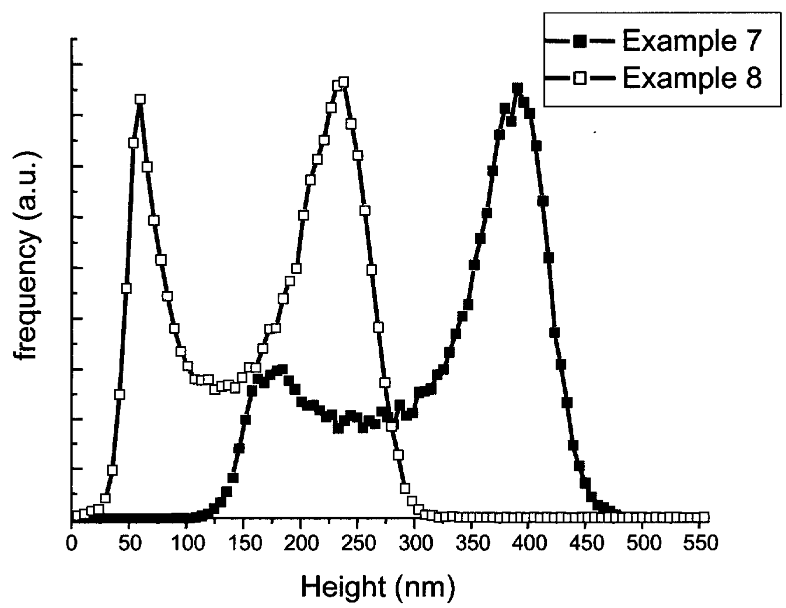


**Fig. 8b**

Grooves height distributions of Examples 7 and 8

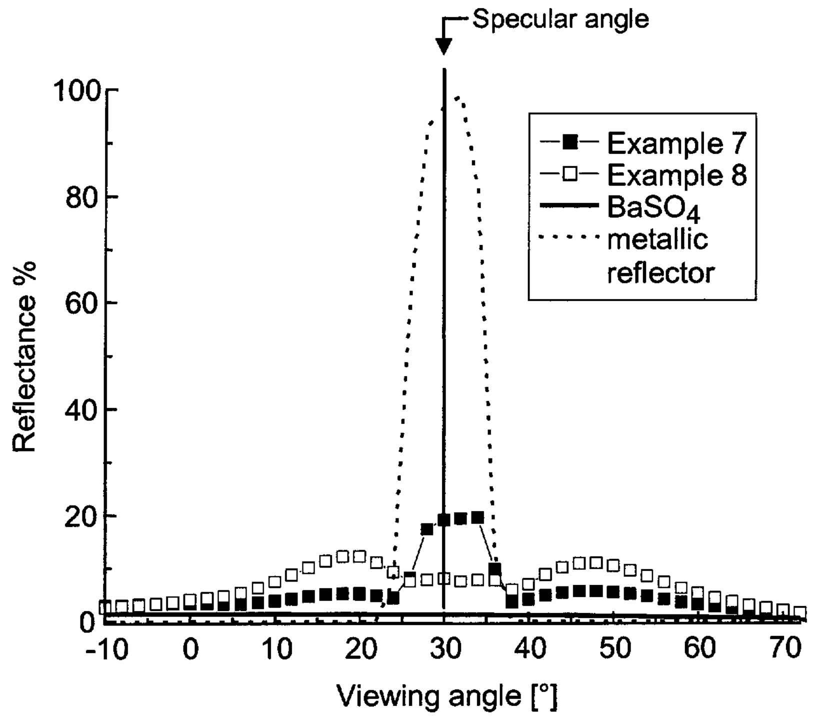


**Fig. 8c**

Reflectance versus viewing angle for Examples 7 and 8 when illuminated under -30° with respect to the normal

European Patent Office

# EUROPEAN SEARCH REPORT

Application Number
EP 02 40 5403

| Category | Citation of document with indication, where appropriate, of relevant passages | Relevant to claim | CLASSIFICATION OF THE APPLICATION (Int.Cl.7) |
|---|---|---|---|
| D,X | M. IBN-ELHAJ, M. SCHADT: "Monomer-Corrugated Directional Thin-Film Reflectors for Bright LCDs" ASIA DISPLAY/ IDW'01, [Online] 16 October 2001 (2001-10-16), pages 1-6, XP002214932 Retrieved from the Internet: <URL:www.rolic.com/publication.htm> * the whole document * | 1-24 | G02B5/02 G02B5/18 G02F1/1335 |
| D,X | WO 01 29148 A (SCHADT MARTIN ;ROLIC AG (CH); IBN ELHAJ MOHAMMED (CH); SCHMITT KLA) 26 April 2001 (2001-04-26) * page 22, line 11 - page 24, line 23 * * figures 7-9 * | 1-24 | |
| D,X | M. IBN-ELHAJ, M. SCHADT: "Optical polymer thin films with isotropic and anisotropic nano-corrugated surface topologies" NATURE, vol. 410, 12 April 2001 (2001-04-12), pages 796-799, XP002214933 * the whole document * | 1-24 | TECHNICAL FIELDS SEARCHED (Int.Cl.7) G02B G02F |
| X | EP 1 039 333 A (CITIZEN WATCH CO LTD) 27 September 2000 (2000-09-27) | 1 | |
| A | * abstract * | 2-24 | |
| X | EP 1 118 903 A (MATSUSHITA ELECTRIC IND CO LTD) 25 July 2001 (2001-07-25) | 1 | |
| A | * abstract * | 2-24 | |
| X | FR 2 809 496 A (SAINT GOBAIN VITRAGE) 30 November 2001 (2001-11-30) * abstract * | 9 | |

The present search report has been drawn up for all claims

| Place of search | Date of completion of the search | Examiner |
|---|---|---|
| MUNICH | 26 September 2002 | Windecker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 40 5403

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2002

| Patent document cited in search report | | Publication date | Patent family member(s) | | Publication date |
|---|---|---|---|---|---|
| WO 0129148 | A | 26-04-2001 | AU | 7638600 A | 30-04-2001 |
| | | | WO | 0129148 A1 | 26-04-2001 |
| | | | EP | 1230319 A1 | 14-08-2002 |
| EP 1039333 | A | 27-09-2000 | WO | 0019266 A1 | 06-04-2000 |
| | | | AU | 9185098 A | 17-04-2000 |
| | | | EP | 1039333 A1 | 27-09-2000 |
| EP 1118903 | A | 25-07-2001 | EP | 1118903 A1 | 25-07-2001 |
| | | | US | 6404471 B1 | 11-06-2002 |
| | | | CN | 1320225 T | 31-10-2001 |
| | | | WO | 0019267 A1 | 06-04-2000 |
| FR 2809496 | A | 30-11-2001 | FR | 2809496 A1 | 30-11-2001 |
| | | | AU | 6400801 A | 03-12-2001 |
| | | | WO | 0190787 A1 | 29-11-2001 |

EPO FORM P0459

For more details about this annex : see Official Journal of the European Patent Office, No. 12/82